Europäisches Patentamt

European Patent Office

Office européen des brevets

(19)

(11) Veröffentlichungsnummer: **0 234 659**
**A2**

## (12) EUROPÄISCHE PATENTANMELDUNG

(21) Anmeldenummer: 87200278.7

(22) Anmeldetag: 20.02.87

(51) Int. Cl.⁴: **G01M 11/00**

(30) Priorität: 28.02.86 DE 3606558

(43) Veröffentlichungstag der Anmeldung:
**02.09.87 Patentblatt 87/36**

(84) Benannte Vertragsstaaten:
**DE FR GB IT SE**

(71) Anmelder: **Philips Patentverwaltung GmbH**
**Billstrasse 80**
**D-2000 Hamburg 28(DE)**
**DE**
Anmelder: **N.V. Philips' Gloeilampenfabrieken**
**Groenewoudseweg 1**
**NL-5621 BA Eindhoven(NL)**
**FR GB IT SE**

(72) Erfinder: **Streckert, Joachim**
**Bochumer Landstrasse 212**
**D-4300 Essen(DE)**

(74) Vertreter: **Koch, Ingo et al**
**Philips Patentverwaltung GmbH Billstrasse**
**80 Postfach 105149**
**D-2000 Hamburg 28(DE)**

(54) **Messanordnung zur Ermittlung der längenabhängigen Dämpfung von Monomode-Lichtwellenleitern nach dem Rückstreuverfahren.**

(57) Die Meßanordnung weist eine im wesentlichen linear polarisiertes Licht erzeugenden Sendelichtquelle (L), auf, die über einen Strahlteiler (3) optisch mit einer zu messenden Monomode-LWL (2) gekoppelt ist. Der Strahlteiler (3) dient dazu, die rückgestreuten Anteile des Sendelichts zu einem optischen Detektor zu leiten. Die Meßanordnung weist außerdem eine der zu messenden LWL vorgeschalteten doppelbrechenden LWL (l) (Vorlauffaser) auf, deren Länge so groß ist, daß die von ihr in zueinander gekreuzten Ebenen (Hauptachsen) geführten Moden an ihrem Ende eine Gruppenlaufzeitdifferenz aufweisen, welche die Kohärenzzeit der Sendelichtquelle überschreitet. Auf einfache Weise werden Fluktuationen der Meßinformation dadurch verhindert, daß die Vorlauffaser (l) zwischen der Sendelichtquelle (L) und dem Strahlteiler (3) angeordnet ist, und derart orientiert ist, daß die Polarisationsebene des durch die Sendelichtquelle (L) in den Anfang der Vorlauffaser (l) gesendete Licht zwischen den gekreuzten Ebenen der Hauptachsen der Vorlauffaser (l) liegt.

## Meßanordnung zur Ermittlung der längenabhängigen Dämpfung von Monomode-Lichtwellenleitern nach dem Rückstreuverfahren

Die Erfindung bezieht sich auf eine Meßanordnung zur Ermittlung der längenabhängigen Dämpfung von Monomode-Lichtwellenleitern nach dem Rückstreuverfahren - (OTDR) mit einer im wesentlichen linear polarisiertes Licht erzeugenden Sendelichtquelle die über einen Strahlteiler optisch mit einer zu messenden Monomode-LWL gekoppelt ist, wobei der Strahlteiler dazu dient, die rückgestreuten Anteile des Sendelichts zu einem optischen Detektor zu leiten, und mit einer der zu messenden LWL vorgeschalteten doppelbrechenden LWL (Vorlauffaser), deren Länge so groß ist, daß die von ihr in zueinander gekreuzten Ebenen (Hauptachsen) geführten Moden an ihrem Ende eine Gruppenlaufzeitdifferenz aufweisen, welche die Kohärenzzeit der Sendelichtquelle überschreitet.

Bei einer nach Journ. of Lightwawe Techn. Vol. LT 3, l985, S. 90l-908 bekannten Anordnung dieser Art ist eine stark doppelbrechende Vorlauffaser vor die Meßfaser gespleißt. Durch die Vorlauffaser wird das in die Meßfaser geleitete Sendelicht depolarisiert, da die in zueinander senkrechten Ebenen linear polarisierten Lichtanteile wegen des in den beiden Hauptachsen der Vorlauffaser unterschiedlichen Brechungsindex verschiedene Geschwindigkeit haben, so daß am Ende der Vorlauffaser eine Gruppenlaufzeitdifferenz entsteht, welche größer als die Kohärenzlänge der Sendelichtquelle ist. Infolgedessen sind aus der Vorlauffaser austretenden beiden Lichtanteile nicht mehr kohärent.

Durch Verwendung einer solchen Vorlauffaser wird bei Rückstreumeßgeräten für Monomode-LWL die Entstehung von Fluktuationen des Rückstreusignals verhindert, die bei Verwendung von zumindest teilweise polarisierenden Strahlteilern entstehen können. Solche Fluktuationen können sich als zeitliche Schwankung des Rückstreusignals auswirken. Insbesondere ist jedoch das Ausmaß der Fluktuation von dem Rückstreuort der Meßfaser abhängig. Der längenabhängig ermittelten Rückstreuintensität, welche bei logarithmischer Darstellung im wesenlichen einen linearen Verlauf hat, sind Fluktuationsschwankungen überlagert, welche eine Auswertung der aus einer Vielzahl von Messungen statistisch gemittelten Kennlinie, z.B. zur Berechnung der Dämpfung oder Feststellung von im Verlaufe der Meßfaser evtl. vorhandenen Fehlstellen, erheblich erschweren oder gar unmöglich machen können. Die ortsabhängig auftretenden Überhöhungen oder Absenkungen des eigentlichen Rückstreumeßwertes können auch nicht durch statistische Auswertung einer Vielzahl von Einzelmessungen eliminiert werden.

Im bekannten Fall muß der Winkel der Polarisationsebene des linear polarisierten Sendelichts unter einem optimalen Winkel von etwa 27° zu einer der Hauptachsen der Vorlauffaser ausgerichtet sein. Nur bei diesem optimalen Winkel verschwindet die Fluktuation unter Berücksichtigung der Tatsache, daß sowohl das Sendelicht als auch das Rückstreulicht die Vorlauffaser durchsetzt. Bereits sehr geringe Abweichungen von diesem optimalen Winkel ergeben für genaue Rückstreumessungen untragbar hohe Fluktuationen.

Der Erfindung liegt die Aufgabe zugrunde, eine Meßanordnung der eingangs genannten Art derart zu gestalten, daß die Verhinderung von Fluktuationen mit einer geringeren Herstellungspräzision für die Meßanordnung erreichbar ist.

Die Lösung gelingt dadurch, daß die Vorlauffaser zwischen der Sendelichtquelle und dem Strahlteiler angeordnet ist, und derart orientiert ist, daß die Polarisationsebene des durch die Sendelichtquelle in den Anfang der Vorlauffaser gesendete Licht zwischen den gekreuzten Ebenen der Hauptachse der Vorlauffaser liegt.

Erfindungsgemäß ist die Vorlauffaser der Sendelichtquelle zugeordnet und nicht mehr, wie im bekannten Fall, der Meßfaser. Dann wird nur das Sendelicht, aber nicht das Rückstreulicht durch die Vorlauffaser geleitet, so daß die fluktuations-unterdrückende Wirkung der Vorlauffaser nicht mehr unter der erschwerenden Bedingung optimiert werden muß, daß Sende-und Rückstreulicht geführt werden.

Dennoch ist auch bei der erfindungsgemäßen Anordnung eine vollständige Eliminierung der Fluktuation erreichbar. Zwar ergeben sich auch bei der erfindungsgemäßen Lösung optimale Werte für die Zuordnung des Winkels der Polarisationsebene des Sendelichts zu den Hauptachsen der Vorlauffaser, jedoch verursachen bestimmte ·Winkelabweichungen vom Optimum erheblich geringere Fluktuationsanstiege als im bekannten Fall.

Bei Verwendung von praktisch polarisationsfreien oder sehr geringfügig polarisierenden Strahlteilern wie z.B. akustooptischen Deflektoren erreicht man ein vollständiges Verschwinden der Fluktuation dadurch, daß die Polarisationsebene des Sendelichts im wesentlichen den Kreuzungswinkel der Hauptachsen der Vorlauffaser halbiert.

Bei Verwendung von teilweise polarisationsselektiven Strahlteilern ist es dagegen vorteilhaft, daß die Polarisationsebene des Sendelichts in einem solchen Winkel zu den Hauptachsen und zwischen diesen angeordnet ist, daß nach dem Durchgang durch den Strahlteiler in den Ebenen der Hauptachsen etwa gleich große Lichtintensitäten vorhanden sind. Die polarisationsbedingte größere Abschwächung des einen der aus der Vorlauffaser dringenden Teilstrahls durch den polarisationsselektiven Strahlteiler wird dabei dadurch kompensiert, daß dieser Teilstrahl durch außermittige Verschiebung der Polarisationsebene des Sendelichts relativ zu den Achsen der Vorlauffasern vorher verstärkt wird.

Bei Verwendung von handelsüblichen doppelbrechenden Fasern und von gebräuchlichen Halbleiterlasern als Sendelichtquelle (mit Kohärenzlängen im mm-Bereich) haben sich Längen von l0 m bis l00 m für die Vorlauffaser als ausreichend erwiesen.

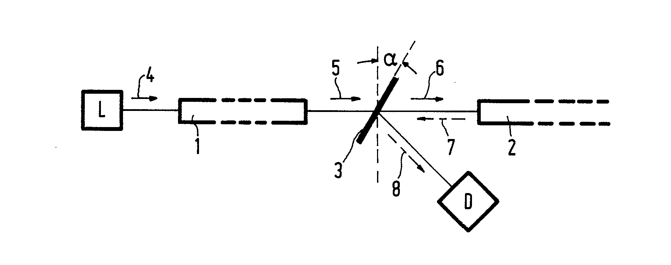

Die vorteilhaften Wirkungen der Erfindung werden anhand der Beschreibung eines in der Zeichnung dargestellten Ausführungsbeispiels näher erläutert.

Die Figur zeigt schematisch eine erfindungsgemäße Rückstreumeßanordnung zur Messung des Dämpfungsverhaltens eines Monomode-Lichtwellenleiters.

Der Hableiterlaser L sendet linear polarisiertes Licht in Richtung des Pfeils 4 in die Vorlauffaser l, welche stark doppelbrechend ist, da deren Brechungsindex in zwei zueinander senkrechten Diagonalrichtungen unterschiedliche Werte hat. Derartige doppelbrechende Fasern sind handelsüblich und werden auch als Panda-Fasern bezeichnet. Eine Doppelbrechung kann man beispielsweise durch mechanische Spannung bewirken, durch welche eine Spannungsanisotropie des Brechungsindex verursacht wird.

Die Polarisationsebene des Sendestrahls liegt zwischen den aufeinander senkrecht stehenden Hauptachsen der Vorlauffaser l. Der Winkel zu beiden Hauptachsen beträgt im optimalen Fall 45°, falls der Strahlteiler 3 praktisch nicht polarisationsselektiv ist. Dann besteht der in Pfeilrichtung 5 die Vorlauffaser verlassende Sendestrahl aus zwei in zueinander senkrechten Ebenen linear polarisierten gleich großen Lichtanteilen. Die Länge der Vorlauffaser ist so zu bemessen, daß die Gruppenlaufzeitdifferenz die Kohärenzzeit des Halbleiterlasers überschreitet (vergl. auch US-A 4 556 293).

Es hat sich herausgestellt, daß bei Verwendung von üblicherweise eingesetzten Halbleiter-Laserdioden etwa l0 m bis l00 m lange Vorlauffasern erforderlich sind. Dann sinddie beiden aus der Vorlauffaser l austretenden Lichtanteile nicht mehr kohärent. Sie werden andererseits räumlich vereint gemeinsam in Richtung des Pfeils 6 durch den Strahlteiler 3 in die zu prüfende Monomode-LWL 2 geleitet.

Die von verschiedenen Längenorten der LWL 2 in Richtung des Pfeils 7 reflektierten Anteile des Sendelichts werden vom Strahlteiler 3 in Richtung des Pfeils 8 auf einen Photodetektor D geleitet. Dessen elektrisches Ausgangssignal wird in einer nicht dargestellten üblichen elektronischen Schaltungsanordnung aufbereitet und ausgewertet.

Im Ausführungsbeispiel ist der Strahlteiler 3 als halbdurchlässiger geneigter Spiegel ausgebildet, dessen Neigungswinkel α mit der Normalen zur Richtung des Sendestrahls einige wenige Grad - (z.B. 2°) beträgt · und im Ausführungsbeispiel übertrieben groß gezeichnet wurde.

Eine minimale bzw. keine Fluktuation der Meßwerte ergibt sich dann, wenn das Sendelicht hinter dem Strahlteiler (Pfeil 6) völlig depolarisiert in die LWL 2 eintritt, also mit in zwei zueinander senkrechten Richtungen linear polarisierten gleich großen nicht kohärenten Anteilen. Dann empfängt der Photodetektor D kein Rückstreulicht, welches wegen eines je nach Rückstreuort unterschiedlichen elliptischen Polarisationszustandes unerwünschte Fluktuationen der Lichtleistung verursachen könnte. Die Summe der von jedem Rückstreuort rückgestreuten Lichtintensität, welche auf den Detekor D·gelangt, hängt dann, abgesehen von statistischen Schwankungen, nur noch von der Dämpfung der zurückgelegten Wegstrecke ab.

## Ansprüche

l. Meßanordung zur Ermittlung der längenabhängigen Dämpfung von Monomode-Lichtwellenleitern nach dem Rückstreuverfahren - (OTDR) mit einer im we*sentlichen linear polarisiertes Licht erzeugenden Sendelichtquelle die über einen Strahlteiler optisch mit einer zu messenden Monomode-LWL gekoppelt ist, wobei der Strahlteiler dazu dient, die rückgestreuten Anteile des Sendelichts zu einem optischen Detektor zu leiten, und mit einer der zu messenden LWL vorgeschalteten doppelbrechenden LWL (Vorlauffaser), deren Länge so groß ist, daß die von ihr in zueinander gekreuzten Ebenen (Hauptachsen) geführten Moden an ihrem Ende eine Gruppenlaufzeitdifferenz aufweisen, welche die Kohärenzzeit der Sendelichtquelle überschreitet.

dadurch gekennzeichnet, daß die Vorlauffaser (l) zwischen der Sendelichtquelle (L) und dem Strahlteiler (3) angeordnet ist, und derart orientiert ist, daß die Polarisationsebene des durch die Sendelichtquelle in den Anfang der Vorlauffaser (I) gesendete Licht zwischen den gekreuzten Ebenen der Hauptachsen der Vorlauffaser (I) liegt.

2. Anordnung nach Anspruch I, dadurch gekennzeichnet, daß die Polarisationsebene des Sendelichts im wesentlichen den Kreuzungswinkel der Hauptachsen der Vorlauffaser (I) halbiert.

3. Anordnung nach Anspruch I, in der der Strahlteiler teilweise polarisationsselektiv ist, dadurch gekennzeichnet, daß die Polarisationsebene des Sendelichts in einem solchen Winkel zu den Hauptachsen und zwischen diesen angeordnet ist, daß nach dem Durchgang durch den Strahlteiler in den Ebenen der Hauptachsen etwa gleich große Lichtintensitäten vorhanden sind.

4. Anordnung nach einem der Ansprüche I bis 3, dadurch gekennzeichnet, daß die Länge der Vorlauffaser (I) einen Wert zwischen I0 m und I00 m hat.